# EUROPEAN PATENT SPECIFICATION

(11) **EP 1 241 457 B1**
(45) Date of publication and mention of the grant of the patent: **17.05.2006**
(21) Application number: 02251807.0
(22) Date of filing: 13.03.2002
(51) Int. Cl.: G01J 5/24, G01J 5/20, H04N 5/217

(54) **Testing resistance bolometer arrays**
Testen von Widerstandsbolometeranordnungen
Tester des arrangements de bolomètres à résistance

(30) Priority: 16.03.2001 GB 0106625
(43) Date of publication of application: 18.09.2002
(73) Proprietor: INFRARED INTEGRATED SYSTEMS LTD., Towcester, Northants NN12 6AD (GB)
(72) Inventor: Porter, Stephen George, Towcester, Northants NN12 6EJ (GB); Fox, John, Kislingbury, Northants NN7 4BD (GB); Singh, Bhajan, Handsworth, Birmingham B21 0QL (GB)
(74) Representative: Dawson, Elizabeth Ann

(56) References cited:
- WO-A-97/01926
- US-A- 4 752 694
- US-A- 5 811 808
- PATENT ABSTRACTS OF JAPAN vol. 1997, no. 09, 30 September 1997 (1997-09-30) & JP 09 126897 A (MATSUSHITA ELECTRIC WORKS LTD), 16 May 1997 (1997-05-16)

## Description

The present invention relates to an infrared sensor comprising an array of resistance bolometer infrared (IR) detectors.

A resistance bolometer infrared detector is typically operated in a resistive potential divider configuration in which one resistor (the sensing bolometer) has a variable resistance due to incident infrared radiation and a second resistor has a substantially constant reference resistance. Typically the reference resistor is constructed in a similar fashion to the sensing bolometer to provide matching over manufacturing tolerances, but constructed in such a way that the thermal conductivity between the bolometer and the substrate is much higher than for the sensing bolometers. In this circuit configuration, the resistive potential divider would be driven with fixed voltage sources. The infrared radiation would then be detected by sensing and measuring a voltage change at the centre connection node of the potential divider caused by the change in resistance in the detector bolometer. In a bolometer array, the driving voltages would be connected to all bolometer elements (potential dividers) in the array. Typically, such bolometers would be connected to an amplifier through a multiplexing switch arrangement. Because all bolometers are connected in this common fashion, there is no means of providing a test stimulus to the individual bolometers that can clearly isolate bolometers from their near neighbours to determine the existence of manufacturing and circuit faults.

It is well known to correct non-uniformities in resistive bolometer arrays once they have been identified. For example, US-A-4752694 discloses an array having an electronic correction circuit including a digital memory storing a separate correction value for each element of the array whereby a different correction voltage may be applied to each element. The stored correction values are determined during an initial test measurement of the individual sensors.

WO-A-97019626 also discloses an arrangement for correcting variations in individual bolometer response.

The present invention provides a method of testing an array of resistance bolometer detector elements having means for detecting infrared radiation by sensing and detecting a voltage and/or current change at a circuit connection node associated with each detector element, the method being characterised by the steps recited in claim 8.

In the preferred embodiment of the invention, two different voltages are applied to alternate elements of the array. In a typical application, the voltage and/or current change at the connection nodes would be read out sequentially. Thus, with the same voltage applied to all of the detector elements under ambient conditions the output would be a DC signal. With two different voltages applied to alternate elements of the array, the result will be an AC output, for example a square wave, which would be easier to measure. The method of the invention can be simplified by forming a visual image of the array indicating the voltages present at the detector elements when at least two different voltages are applied. If the different voltages are applied in a visually recognisable pattern, such as a chequerboard pattern, any irregularity such as a fault at one of the detector elements is easily recognised. Additionally or alternatively, it is possible to measure the difference in voltage between the connection node of each detector element and the connection node of an immediately adjacent element at a different applied voltage. Under ambient conditions and in the absence of any fault, this difference should reflect the difference between the applied voltages.

The method can be used to test faults in the detector elements themselves or it can be used to test faults in the circuitry associated with the individual detector elements, such as the detector element amplifiers.

The invention also provides a circuit comprising the features recited in claim 1.

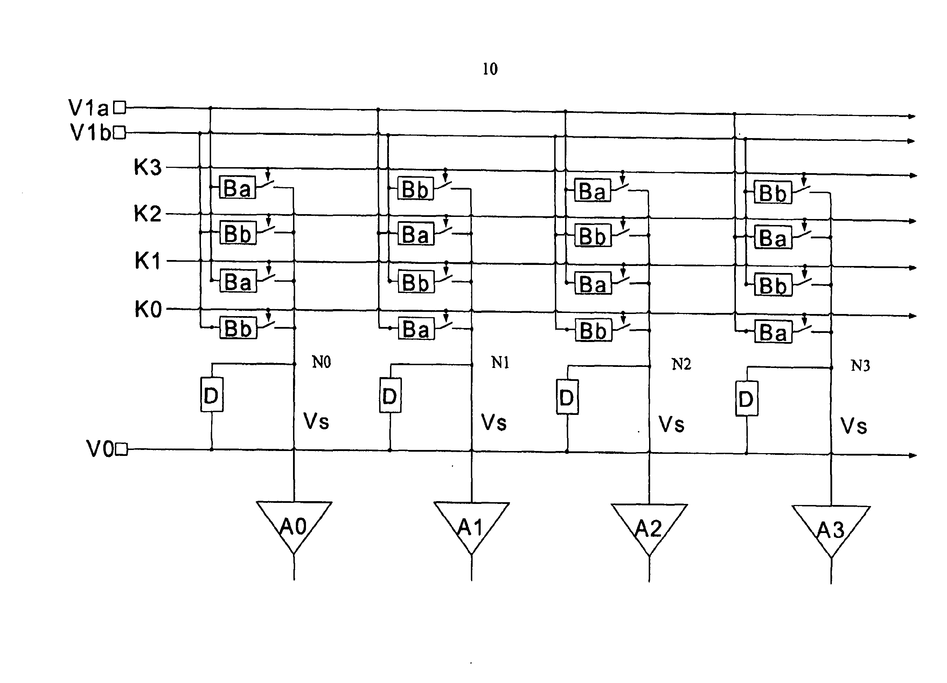

An embodiment of the invention will now be described by way of example only and with reference to the accompanying drawing which is a schematic circuit diagram of an array according to the invention. For simplicity, an array of 4 x 4 elements is shown, but the principles apply to larger arrays.

In the drawing, an array of resistance bolometers B are arranged in rows and columns. The bolometers of a column have a common sense line Vs to which they are connectable via a multiplexing switch arrangement controlled by signals K0, K1, K2 and K3. Each Vs line is connected to a column amplifier A0, A1, A2, A3. Alternate bolometers Ba are connected to supply rail V1a and, via reference bolometer D, supply rail V0. The remaining alternate bolometers Bb are connected between supply rail V1b and, via reference bolometer D, supply rail V0.

Thus, the illustrated bolometer array is partitioned into two interleaved halves, where one half is connected to a power source supply voltage V1a, and the other half to another power supply voltage V1b. In normal detector operation, the power supplies V1a and V1b are connected together, and to the same power supply voltage, V1.

In test, the bolometer array power supply connections V1a and V1b are separated and are driven separately In one example the value of V 1a is reduced by an amount ΔV1 as compared to V1, and the value V1b is increased by ΔV1 as compared to V1. This differential driving of V1a and V1b has the effect of creating a chequerboard pattern across the array; i.e. alternate elements are lifted and depressed by ΔV1 from the average voltage level, thus generating a difference in voltage of 2 x ΔV1 between adjacent elements, with odd elements in a row or column being high and even elements being low. Alternatively, the value of V1a is increased by an amount ΔV1, and the value of V1b is decreased by ΔV1, resulting in a similar chequerboard pattern with odd elements in a row or column low and even elements high. The voltage increase or decrease can be sensed at the central nodes N0, N1, N2, N3, giving a difference in voltage between adjacent bolometers equal to (2 x ΔV1) x D/(D+B). By this means, faults such as incorrect values of bolometer resistances, adjacent bolometers being shorted together, or one or more of the amplifiers having incorrect gain, may be detected as a departure from this difference voltage. The variation may be detected automatically by suitable electronic means.

Alternatively, the pattern of voltages detected at the nodes may be displayed on a visible display such as a computer monitor. With no fault and under normal ambient conditions a chequerboard pattern will be displayed and any deviation from this will be easily recognised.

A similar effect can be achieved by partitioning the bolometer array negative power supply voltage V0 and driving in a similar way. Alternatively both V0 and V1 may be partitioned and, in test, both V0a and V1a increased by an amount ΔV and both V0b and V1b decreased by an amount ΔV. This will produce a voltage difference at Vs between adjacent bolometers of 2 x ΔV.

In some bolometer arrays the fixed resistor D is replaced with a constant current source. In this case, a detector bolometer will sense infrared radiation by a change of resistance, which in turn causes a change in voltage across the bolometer. If the bolometers are referenced to V1a and V1b then a chequerboard pattern at the central sense node will be created in a similar fashion as before.

The chequerboard pattern so developed at the sense point can be used to test any amplifier or other circuitry connected to the sense point.

In another alternative arrangement, the nodes N could be connected to the inverting inputs of the amplifier in which case a change in incident radiation would manifest itself as a change in current flowing at N.

In another alternative arrangement 1 and/or V0 may be partitioned into more than two independent lines so that, for example, a more sophisticated pattern than a simple chequerboard pattern may be achieved. This may be particularly appropriate for arrays in which the output signals are multiplexed into more than one output line, or where the supply lines are fed from different sides of the array, as may be the case for a very large array.

It will be appreciated that the invention provides a test method for bolometer elements and bolometer arrays requiring no active analogue circuitry or control. The same test method can be used to provide test stimulus for amplifiers connected to a bolometer array without any additional analogue circuitry or control.

## Claims

1. A circuit comprising an array of resistance bolometer detector elements (B), supply means enabling the application of a voltage across each detector element (B), means for detecting infrared radiation by sensing and detecting a voltage and/or current change at a circuit connection node (N) associated with each detector element (B), and readout means;
**characterised in that** the supply means enables the application of at least two different voltages (V1a, V1b) to the detector elements (B) in a predetermined pattern such that each element is supplied by a voltage different to the voltage applied to at least one of its immediate neighbours, whereby a fault in an element or its associated circuitry will cause a departure from an expected readout signal pattern.

2. A circuit as claimed in claim 1 in which each detector element (B) is arranged in series with a reference circuit element (D) and the said circuit connection node (N) is the connection node between the detector element (B) and the reference circuit element (D).

3. A circuit as claimed in claim 2 in which the reference circuit element (D) is a resistor.

4. A circuit as claimed in claim 2 in which the reference circuit element (D) is a constant current source.

5. A circuit as claimed in any preceding claim in which the supply means is arranged to apply two different voltages (V1a, V1b) to alternate elements (Ba,Bb) of the array.

6. A circuit as claimed in claim 5 in which the detector elements (B) are arranged in rows and columns and the supply means is arranged to apply two different voltages (V1a, V1b) to the elements in a chequer board pattern (Ba,Bb).

7. A circuit as claimed in any preceding claim having means for measuring the difference in voltage between the said connection node (N) of each detector element (B) and the said connection node (N) of an immediately adjacent element (B) at a different applied voltage.

8. A method of testing an array of resistance bolometer detector elements (B) having means for detecting infrared radiation by sensing and detecting a voltage and/or current change at a circuit connection node (N) associated with each detector element (B), the method being **characterised by** the steps of:
applying at least two different voltages (V1a,V1b) to the elements of the array (B) in a predetermined pattern so that each element is supplied by a different voltage to at least one of its immediate neighbours , and
detecting a voltage and/or current change at a circuit connection node (N) associated with each detector element (B) whereby to identify a fault in an element or its associated circuitry as a departure from an expected pattern.

9. A method as claimed in claim 8 comprising arranging each detector element (B) in series with a reference circuit element (D) and detecting the current and/or voltage change at the connection node (N) between the detector element (B) and the reference circuit element (D).

10. A method as claimed in claim 8 or 9 including the further step of forming a visual image of the array indicating the voltages present at the detector elements (B) when at least two different voltages are applied.

11. A method as claimed in claim 8, 9 or 10 in which the different voltages are applied in a visually recognisable pattern.

12. A method as claimed in any of claims 8 to 1 wherein two different voltages (V1a,V1b) are applied to alternate elements (Ba,Bb) of the array.

13. A method as claimed in claim 12 in which the detector elements are arranged in rows and columns and the two different voltages (V1a,V1b) are applied to the elements in a chequer board pattern (Ba,Bb).

14. A method as claimed in any of claims 8 to 13 including the further steps of measuring the difference in voltage between the said connection node (N) of each detector element (N) and the said connection node (N) of an immediately adjacent element (B) at a different applied voltage.

15. Use of the method of any of claims 8 to 14 to test faults in the detector elements (B).

16. Use of the method of any of claims 8 to 14 to test faults in circuitry associated with the individual detector elements (B).

## Patentansprüche

1. Schaltung, die eine Matrix von Widerstandsbolometer-Detektorelementen (B) umfasst, Versorgungsmittel, die das Anlegen einer Spannung an jedes Detektorelement (B) ermöglichen, Mittel zum Detektieren von Infrarotstrahlung durch Erfassen und Detektieren einer Spannungs- und/oder Stromänderung an einem mit jedem Detektorelement (B) assoziierten Schaltungsverbindungsknoten (N), und Auslesemittel;
**dadurch gekennzeichnet, dass** das Versorgungsmittel das Anlegen von wenigstens zwei unterschiedlichen Spannungen (V1a, V1b) an die Detektorelemente (B) in einem vorbestimmten Muster ermöglicht, so dass jedes Element eine andere Spannung erhält als wenigstens einer seiner unmittelbaren Nachbarn, so dass ein Fehler in einem Element oder seinem assoziierten Schaltkomplex eine Abweichung von einem erwarteten Auslesesignalmuster verursacht.

2. Schaltung nach Anspruch 1, bei der jedes Detektorelement (B) in Serie mit einem Referenzschaltungselement (D) angeordnet ist und der genannte Schaltungsverbindungsknoten (N) der Verbindungsknoten zwischen dem Detektorelement (B) und dem Referenzschaltungselement (D) ist.

3. Schaltung nach Anspruch 2, bei der das Referenzschaltungselement (D) ein Widerstand ist.

4. Schaltung nach Anspruch 2, bei der das Referenzschaltungselement (D) eine Konstantstromquelle ist.

5. Schaltung nach einem der vorherigen Ansprüche, bei der das Versorgungsmittel die Aufgabe hat, zwei unterschiedliche Spannungen (V1a, V1b) an abwechselnde Elemente (Ba, Bb) der Matrix anzulegen.

6. Schaltung nach Anspruch 5, bei der die Detektorelemente (B) in Reihen und Spalten angeordnet sind und das Versorgungsmittel die Aufgabe hat, zwei unterschiedliche Spannungen (V1a, V1b) an die Elemente in einem Schachbrettmuster (Ba, Bb) anzulegen.

7. Schaltung nach einem der vorherigen Ansprüche mit Mitteln zum Messen der Spannungsdifferenz zwischen dem genannten Verbindungsknoten (N) jedes Detektorelementes (B) und dem genannten Verbindungsknoten (N) eines unmittelbar benachbarten Elementes (B) bei einer anderen angelegten Spannung.

8. Verfahren zum Testen einer Matrix von Widerstandsbolometer-Detektorelementen (B) mit Mitteln zum Detektieren von Infrarotstrahlung durch Erfassen und Detektieren einer Spannungs- und/oder Stromänderung an einem mit jedem Detektorelement (B) assoziierten Schaltungsverbindungsknoten (N), wobei das Verfahren durch die folgenden Schritte **gekennzeichnet** ist:
Anlegen von wenigstens zwei unterschiedlichen Spannungen (V1a, V1b) an die Elemente der Matrix (B) in einem vorbestimmten Muster, so dass jedes Element eine andere Spannung als wenigstens einer seiner unmittelbaren Nachbarn erhält, und
Detektieren einer Spannungs- und/oder Stromänderung an einem mit jedem Detektorelement (B) assoziierten Schaltungsverbindungsknoten (N), um **dadurch** einen Fehler in einem Element oder seinem assoziierten Schaltkomplex als eine Abweichung von einem erwarteten Muster zu identifizieren.

9. Verfahren nach Anspruch 8, das das Anordnen jedes Detektorelementes (B) in Serie mit einem Referenzschaltungselement (D) und das Detektieren der Strom- und/oder Spannungsänderung an dem Verbindungsknoten (N) zwischen dem Detektorelement (B) und dem Referenzschaltungselement (D) beinhaltet.

10. Verfahren nach Anspruch 8 oder 9, das ferner den Schritt des Erzeugens eines visuellen Bildes der Matrix beinhaltet, das die an den Detektorelementen (B) anliegenden Spannungen anzeigt, wenn wenigstens zwei unterschiedliche Spannungen angelegt werden.

11. Verfahren nach Anspruch 8, 9 oder 10, bei dem die unterschiedlichen Spannungen in einem visuell erkennbaren Muster angelegt werden.

12. Verfahren nach einem der Ansprüche 8 bis 11, bei dem zwei unterschiedliche Spannungen (V1a, V1b) an abwechselnde Elemente (Ba, Bb) der Matrix angelegt werden.

13. Verfahren nach Anspruch 12, bei dem die Detektorelemente in Reihen und Spalten angeordnet sind und die beiden unterschiedlichen Spannungen (V1a, ,V1b) in einem Schachbrettmuster (Ba, Bb) an die Elemente angelegt werden.

14. Verfahren nach einem der Ansprüche 8 bis 13, das die weiteren Schritte des Messens der Spannungsdifferenz zwischen dem genannten Verbindungsknoten (N) jedes Detektorelementes (B) und dem genannten Spannungsknoten (N) eines unmittelbar benachbarten Elementes (B) bei einer anderen angelegten Spannung beinhaltet.

15. Anwendung des Verfahrens nach einem der Ansprüche 8 bis 14 zum Testen von Fehlern in den Detektorelementen (B).

16. Anwendung des Verfahrens nach einem der Ansprüche 8 bis 14 zum Testen von Fehlern in einem Schaltkomplex, die mit den individuellen Detektorelementen (B) assoziiert sind.

## Revendications

1. Circuit comprenant une matrice d'éléments détecteurs à bolomètre à résistance (B), des moyens d'alimentation permettant l'application d'une tension sur chaque élément détecteur (B), des moyens pour détecter un rayonnement infrarouge en captant et détectant un changement de tension et/ou de courant au niveau d'un noeud de connexion de circuit (N) associé à chaque élément détecteur (B), et des moyens d'affichage ;
**caractérisé en ce que** les moyens d'alimentation permettent l'application d'au moins deux tensions différentes (V1a, V1b) aux éléments détecteurs (B) selon un modèle prédéterminé tel que chaque élément est alimenté par une tension différente de la tension appliquée à au moins un de ses voisins immédiats, moyennant quoi une erreur dans un élément ou ses circuits associés provoquera un écart d'un modèle de signal d'affichage attendu.

2. Circuit selon la revendication 1, dans lequel chaque élément détecteur (B) est agencé en série avec un élément de circuit de référence (D) et ledit noeud de connexion de circuit (N) est le noeud de connexion entre l'élément détecteur (B) et l'élément de circuit de référence (D).

3. Circuit selon la revendication 2, dans lequel l'élément de circuit de référence (D) est une résistance.

4. Circuit selon la revendication 2, dans lequel l'élément de circuit de référence (D) est une source de courant constant.

5. Circuit selon l'une quelconque des revendications précédentes, dans lequel les moyens d'alimentation sont agencés pour appliquer deux tensions différentes (V1a, V1b) à des éléments alternés (Ba, Bb) de la matrice.

6. Circuit selon la revendication 5, dans lequel les éléments détecteurs (B) sont agencés en rangées et colonnes et les moyens d'alimentation sont agencés pour appliquer deux tensions différentes (V1a, V1b) aux éléments selon un modèle en damiers (Ba, Bb).

7. Circuit selon l'une quelconque des revendications précédentes, ayant des moyens pour mesurer la différence de tension entre ledit noeud de connexion (N) de chaque élément détecteur (B) et ledit noeud de connexion (N) d'un élément (B) immédiatement adjacent à une tension appliquée différente.

8. Procédé de test d'une matrice d'éléments détecteurs à bolomètre à résistance (B) ayant des moyens pour détecter un rayonnement infrarouge en captant et détectant un changement de tension et/ou de courant au niveau d'un noeud de connexion de circuit (N) associé à chaque élément détecteur (B), le procédé étant
**caractérisé par** les étapes consistant à :
appliquer au moins deux tensions différentes (V1a, V1b) aux éléments de la matrice (B) selon un modèle prédéterminé tel que chaque élément est alimenté par une tension différente d'au moins un de ses voisins immédiats, et
détecter un changement de tension et/ou de courant au niveau d'un noeud de connexion de circuit (N) associé à chaque élément détecteur (B), en vue d'identifier une erreur dans un élément ou ses circuits associés en tant qu'écart d'un modèle attendu.

9. Procédé selon la revendication 8, comprenant l'agencement de chaque élément détecteur (B) en série avec un élément de circuit de référence (D) et la détection du changement de courant et/ou de tension au niveau du noeud de connexion (N) entre l'élément détecteur (B) et l'élément de circuit de référence (D).

10. Procédé selon la revendication 8 ou 9, comprenant l'étape supplémentaire consistant à former une image visuelle de la matrice indiquant les tensions présentes au niveau des éléments détecteurs (B) lorsqu'au moins deux tensions différentes sont appliquées.

11. Procédé selon la revendication 8, 9 ou 10, dans lequel les différentes tensions sont appliquées selon un modèle reconnaissable du point de vue visuel.

12. Procédé selon l'une quelconque des revendications 8 à 11, dans lequel deux tensions différentes (V1a, V1b) sont appliquées à des éléments alternés (Ba, Bb) de la matrice.

13. Procédé selon la revendication 12, dans lequel les éléments détecteurs sont agencés en rangées et colonnes et les deux tensions différentes (V1a, V1b) sont appliquées aux éléments selon un modèle en damiers (Ba, Bb).

14. Procédé selon l'une quelconque des revendications 8 à 13, comprenant les étapes supplémentaires consistant à mesurer la différence de tension entre ledit noeud de connexion (N) de chaque élément détecteur (B) et ledit noeud de connexion (N) d'un élément (B) immédiatement adjacent à une tension appliquée différente.

15. Utilisation du procédé selon l'une quelconque des revendications 8 à 14 pour tester des erreurs dans les éléments détecteurs (B).

16. Utilisation du procédé selon l'une quelconque des revendications 8 à 14 pour tester des erreurs dans des circuits associés aux éléments détecteurs (B) individuels.
